(19) Europäisches Patentamt
European Patent Office
Office européen des brevets

(11) **EP 3 330 926 A1**

(12) **EUROPEAN PATENT APPLICATION**

(43) Date of publication:
**06.06.2018   Bulletin 2018/23**

(51) Int Cl.:
***G06T 7/73*** (2017.01)

(21) Application number: **16306593.1**

(22) Date of filing: **01.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **Servant, Fabien**
  **35576 Cesson Sévigné (FR)**
• **Fradet, Matthieu**
  **35576 Cesson Sévigné (FR)**
• **Laurent, Anthony**
  **35576 Cesson Sévigné (FR)**

(74) Representative: **Huchet, Anne et al**
**TECHNICOLOR**
**1-5, rue Jeanne d'Arc**
**92130 Issy-les-Moulineaux (FR)**

(54)    **METHOD, DEVICE AND SYSTEM FOR ESTIMATING A POSE OF A CAMERA**

(57)    A method for determining a pose estimation of a camera in an environment including a display for moving pictures comprises:

- obtaining (10) reference frames corresponding in a synchronized way to at least part of at least some of multiple displayed frames displayed on said display;
- obtaining (20) image data from images of said displayed frames captured with said camera by shooting said display;
- determining (30) said pose estimation from correlating at time steps said image data and said reference frames.

    Corresponding device, and applications to augmented reality

Figure 1

**Description**

**1 Technical field**

The present disclosure relates to the field of video processing. More specifically, the present disclosure relates to computer vision. More particularly, the methods and devices proposed in the present disclosure are adapted for estimating a pose of a camera during shooting.

**2. Background**

A major field of computer vision is the camera pose estimation. Several situations may occur for which estimating the pose of the camera is of importance. This is for example the case for augmented reality or for mixed reality. Usually, estimating the pose of a camera consists in estimating the position and/or orientation of the camera. This is important for example when the camera is moving during the video processing tasks.

For example, for augmented reality, it is needed to properly insert virtual objects in the real scene: the virtual camera used to render objects must be "aligned" with the real camera. The augmentation of the quality of the insertion is directly correlated with the quality of the camera's pose estimation.

The camera pose is commonly estimated with respect to some reference geometric frame(s). The estimated camera pose will be a rigid transformation between this reference frame(s) and the camera geometric frame(s).

Usually, the reference frame must be known a priori to enable offline edition of the augmented reality scenario. This means that either the environment is known or some fixed recognizable object (with a known pose) is visible in the camera point of view, so that the processing may be done in view of this fixed recognizable object.

Current production grade augmented reality systems are using planar recognizable objects known as markers. These markers are designed to be easily recognizable by a camera sensor (their content is unique and texture-rich) and are typically printed on sheets of papers.

Several solutions exist, based on static templates, and work for known situations, where the static template is visible and where the static template may be easily recognized among the other objects of the scene. However, the first problem of these solutions is the necessity of having these static templates: this is not convenient for a home use of these solutions because the user needs to position these templates before using the augmented reality application, which may lead to a quite deceptive experience.

Additionally, in many scenarios, including living room usage (moreover in dark lighting conditions), these static templates are either not correctly perceived or not perceived at all. This implies that the augmented reality application will not work properly or not work at all.

Thus, there's a need for having a camera pose estimation method and device which do not have these drawbacks of prior art techniques.

**3. Summary**

The disclosure allows solving at least some of the prior art drawbacks. More specifically, the method, device and system of the present disclosure allow obtaining camera pose estimation without using static templates like in prior art solutions.

More specifically, it is disclosed a method for determining a pose estimation of a camera in an environment including a display for moving pictures. According to the disclosure, the method comprises:

- obtaining reference frames corresponding in a synchronized way to at least part of at least some of multiple displayed frames displayed on said display;
- obtaining image data from images of said displayed frames captured with said camera by shooting said display;
- determining said pose estimation from correlating at time steps said image data and said reference frames.

It is thus possible to use the display panel as a dynamic content marker for tracking the pose using standard cameras while tackling the temporal artifacts.

The received reference frames enable a dynamic content marker for tracking the pose, while possibly getting rid of external markers and having a solution operational even in dark conditions.

According to a specific feature, determining said pose estimation relies on a previously determined pose estimation

Thus, determining the pose estimation is faster than from scratch.

According to a specific feature, said pose of said camera comprises a rigid transformation.

Since the pose estimation includes a rigid geometric transformation between a reference frame and a camera frame, it is the possible to easily transform one frame to another.

According to a specific feature, said pose estimation is combined with watermarking at least one of said reference frames.

According to a specific feature, said pose estimation is initialized with watermarking.

According to a specific feature, said watermarking comprises sound watermarking.

According to a specific feature, said reference frames cover a first time window, and said image data cover a second time window, wherein said first time window is greater or equal to said second time window.

According to a specific feature, said step for obtaining reference frames comprises:

- receiving a set of reference frames, said set of reference frames belonging to a time window;
- downsizing at least one frame of a set of reference frames, according to a predetermined downsizing parameter, delivering a set of reference downsized frames;
- temporally rescaling at least one frame of said set of reference downsized frames, according to a predetermined temporal rescaling parameter, delivering a set of temporally rescaled frames.

According to a specific feature, said step for temporally rescaling at least one of said reference frames comprises determining a virtual shutter integration of at least two reference frames for a given time step comprised in said time window.

According to a specific feature, said step for obtaining image data from images of said displayed frames comprises:

- receiving a set of capture frames, said set of capture frames belonging to a time window;
- for at least one frame of said set of capture frames, applying a previously obtained rigid transformation, delivering a set of transformed images;
- downsizing at least one frame of said set of transformed images, according to a predetermined downsizing parameter, and at least one adjustment parameter delivering a set of downsized transformed images.

According to a specific feature, determining said pose estimation from correlating at time steps said image data and said reference frames comprises a mapping step which comprises:

- obtaining a coarse approximation of said pose estimation; and
- refining said coarse approximation delivering said pose estimation.

In another embodiment, the disclosure also relates to a device for determining a pose estimation of a camera in an environment including a display for moving pictures, said device comprising at least one processor, in which the at least one processor is configured to implement any method as previously exposed.

In a specific embodiment of the device, said at least one processor is configured for:

- obtaining reference frames corresponding in a synchronized way to at least part of at least some of multiple displayed frames displayed on said display;
- obtaining image data from images of said displayed frames captured with said camera by shooting said display;
- determining said pose estimation from correlating at time steps said image data and said reference frames.

The device is further advantageously configured for carrying out a method for determining a pose estimation in any of its above execution modes.

The disclosure is also relevant to a mobile apparatus comprising a camera, and further comprising a device for determining a pose estimation as mentioned above.

## 4. Brief description of the drawings

- figure 1 is a schematic block diagram illustrating the method for estimating a pose of a camera;
- figure 2 illustrates a system for carrying out the method;
- figure 3 illustrates an embodiment of the method;
- figure 4 illustrates a device for implementing the disclosed method.

**5. Description**

5.1. General principle

As previously explained, the general principle of the invention consists in changing the way reference data are obtained. Previously, reference data were obtained using static templates which were positioned in the shooting area of the camera: the static templates were shot by the camera giving reference data in the frames shot by the camera, thus leading, by a computational process, to an estimation of the camera pose (usually as a function of the planar surface of the static templates). According to the present disclosure, reference data are obtained from video frames which are displayed on a display device. The computational process consists in estimating the camera pose in view of these reference data which are called reference frames.

Thus, thanks to this technique, it is possible to precisely estimate the pose of the camera without needing any static template. This leads to a better service rendered by the various applications that may need an estimation of a pose of a camera, because the user is not required to install any additional component. This also leads to better results in dark or shadowed conditions since it is supposed that the camera shoot (at least partially) a display device which emits light. Thus even in dark, the proposed solution ensures that sufficient light is present in order to allow at least a partially captures of the pictures by the shooting camera.

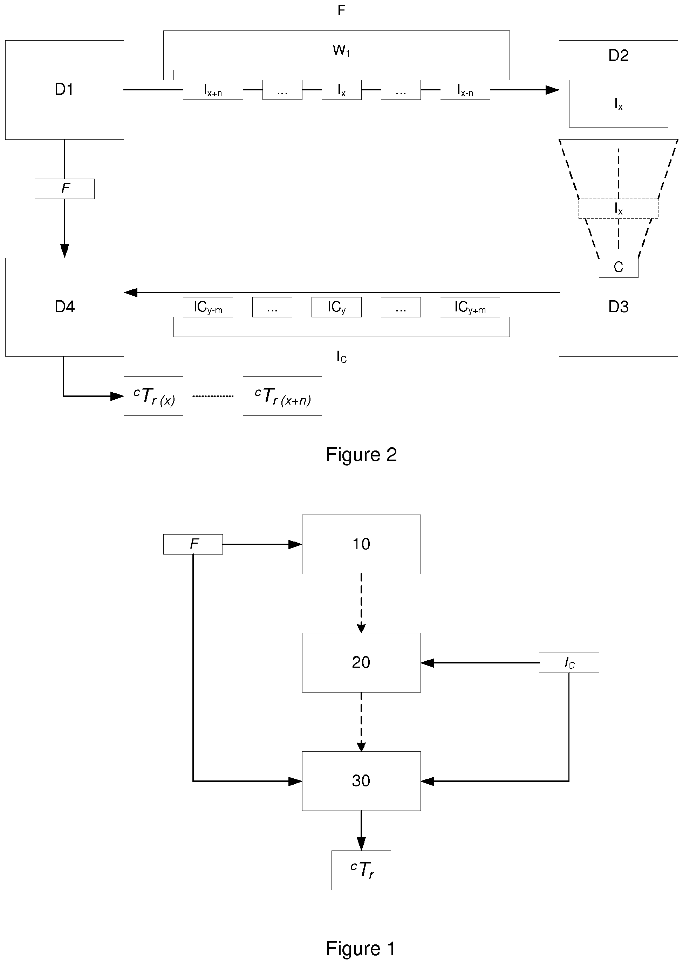

Figure 1 exposes the main steps of the proposed technique. It is disclosed a method for determining a pose estimation of a camera (C) in an environment including a display for moving pictures (D2), characterized in that said method comprises:

- obtaining (10) reference frames (F) corresponding in a synchronized way to at least part of at least some of multiple displayed frames displayed on said display (D2);
- obtaining (20) image data (Ic) from images of said displayed frames captured with said camera (C) by shooting said display (D2);
- determining (30) said pose estimation from correlating at time steps said image data (Ic) and said reference frames (F).

Thus, the principles of the method comprise shooting (at least partially) a device on which reference frames of a video are displayed. In the same time, reference frames are transmitted to a device. Using the reference frames which are received and the reference frames which are captured (shooted), pose estimation is done. Globally the pose estimation process consists in aligning, geometrically and temporally, the received referenced frames and the captured referenced frames. Thanks to these two alignments (or synchronizations) the pose of the camera is estimated. The proposed method allows obtaining a pose estimation, this pose being used to locate objects, for example in augmented reality scenes. The display which is shot by the camera is, according to a global situation, a part of fixed display panel in said environment (for example a TV or a computer screen display). The display panel may also be part of a display set, comprising the display and another device, such as a set top box. In such a situation, the reference frames may be obtained directly from the set top box. In a specific embodiment, the set top box in itself may be able to process the proposed method. In another embodiment, the camera may be included in a user device (smartphone, pad), and the proposed method may be directly processed by this user device. The user device is then in charge of receiving the reference frames and to determine the pose of the user's device camera in view of the reference frames and the captured frames. According to the disclosure, obtaining reference frames may be done in several ways: the first one consists in receiving the reference frames as and when they are transmitted (or displayed) by the display device; this is the case, for example, of a so called "streaming" transmission of the frames to be displayed to a set top box (case of a broadcast for example). A second case may consist in storing the frames (e.g. the movie, the TV show, etc.) and receiving timestamps of the reference frames: the device already has the frames and it receives the information relative to the frames which are (to be) displayed, so that it can process these frames accordingly. A mix of the two previous cases is also possible. The point is that the device which implements the method has to have sufficient information for correlating (in time and in space) image data and reference frames. Additionally, the pose estimation may have several forms: it may comprise a rigid transformation of one image to one other; it may also comprise a discrete (time) transformation.

In other words, the method comprises receiving said reference frames from a telecommunication transmission medium, receiving said image data from said camera, determining said pose estimation with at least one processor and outputting data associated with said pose estimation for providing a user of said camera with information generated partly from said data associated with said pose estimation.

Figure 2 discloses a description of an embodiment of a system in which the proposed technique may be implemented. For clarity, the same references than in figure 1 have been kept. A device *D1* is connected to a display panel *D2* and controls a video playback on this display panel. *D1* has knowledge about the video for at least a time window $W_1$ before and after the currently displayed frame on *D2 (note that D1 may be directly integrated into D2).* Let's define *I,* the video, as an array of frames indexed by the frame timestamp.

A user's device *D3* (such as glasses or a tab, smartphone, AR helmet - for Augmented Reality, etc.) is connected to a processing device *D4* (*D3* may be the same unit than *D4 or integrated into D4*). *D1* and *D4, D3* and *D4* are connected through a high bandwidth/low latency connection (for example a wireless one).

Whenever asked, *D1* sends to *D4* a set of frames *F* ($I_{x-n},...I_{x+n}$) covering the current time window $W_1$:

$$F = I[t] \ \forall \ t \ \in W_1$$

$W_1$ is large enough to consider the latency between the display and the tracking process: the purpose is to be sure that - at any time - one of the frames in *F* is the one displayed on *D2*.

D2 is (at least partially) filmed by the camera (C) of D3, which transmits images data $I_C$ (a set of frames $Ic_{y-m},...Ic_{y+m}$) to the device D4.

*D4* has information about the tracking result at the previous time step. The tracking result is a geometrical transformation between the camera C (contained by *D3*) and *D2*. It also has information about the starting and finishing times of the previous camera shutter opening (the time is for example defined by the capture video frames timestamps, or the capture video frame rate).

Using this previous time information and knowledge about the camera shutter (typically the frame rate of the captured images), one can roughly deduce a time window $W_2$ contained in $W_1$ :

$card(W_1) \geq card(W_2)$ or $card(W_1) \gg card(W_2)$, depending on implementation.

Knowing $W_2$, *F* and the images $I_c$ acquired by the camera (which are image data), the proposed technique estimates the relative transformation ${}^cT_r$, where $\mathcal{F}_r$ is the display panel geometric frame.

Various embodiments of the proposed technique may be implemented. In the following a specific embodiment is presented. In this embodiment, it is assumed that the camera pose is known for the previous time step (basically, that the transformation ${}^cT_r$ is known for the previous iteration, i.e. that ${}^cT_{r(n-1)}$ is known).

In this embodiment, the global system is considered to be initialized. The proposed technique also assumes that the previous time step pose is relatively close to the current time step pose. Initialization is not covered by the proposed technique: that means that the proposed technique is not used, in the same way, for determining ${}^cT_{r(0)}$, the first transformation.

However, according to the disclosure, the initialization (i.e the obtaining of the first transformation), may be done by using additional data coming both from the camera and the reference frames. Hence, it is proposed to initialize the system with help of the audio stream which is captured along with the captured frames and with the sound which is included in or aside the reference frame. The technique consists in, before the processing applied to the frame, processing the audio stream to obtain the necessary information for coarsely estimating the time at which the capture is done. According to the proposed technique, the audio stream in watermarked, so that estimating the time at which the capture is done only necessitates to periodically find the watermark in the audio stream.

According to the disclosure, in specific embodiments, the frames (reference frames and consequently captured frames) are watermarked. The initialization of the system can also be done by using the watermarked frames, just like audio streams. Advantageously, the watermark technique has two main features: the first one is to be sufficiently resistant for being captured by the camera; the second one is that it evolves in time: that means that, for example, knowing the watermark allows knowing to which frame (or group of frames) it is referenced to. This second feature allows speeding up the pose estimation process, since recognizing the watermark, both in the reference frames and in the captured frames implies that it is easier to timely map these frames, thus, once the frames are timely mapped, the pose estimation may be found by using a geometric transformation.

Considering the previously presented system, let us explain the main steps of the proposed technique in this first embodiment, by using the previous references (of figures 1 and 2, which are applicable to this embodiment).

In a first step (10), reference frames (*F*) are obtained; reference frames belong to a set of reference frame and extend on a given period of time ($W_1$);

In a second step (20), captured frames (Id) are obtained; captured frames belong to a set of captured frames and extend on a given period of time ($W_2$), where $W_2$ is smaller than $W_1$. According to a specific embodiment, one camera frame is acquired to compute one transformation. W2 is a subset of W1 refined using camera information. It limits the set of reference frames which are of interest.

In a third step (30), a correlation is made between reference frames (*F*) and capture frames ($I_C$) so as to determine a transformation ${}^cT_{r(n)}$; this transformation being calculated, in a specific embodiment, as a function of a previously obtained transformation (${}^cT_{r(n-1)}$).

Thus, thanks to the proposed technique, the method allows transforming the captured frames obtained by the camera so as to match the reference frames which are obtained by another channel. Matching the two allows finding a transformation which may then be used to render additional digital content in a mixed reality scene: for example, this transformation may be use to change the appearance of a digital object in the scene; the digital object is then correctly oriented in view of the transformation applied on this object.

Following this general description, a specific embodiment is disclosed. It has to be understood however, that this specific embodiment does not limit the scope of the disclosure and that the determination of the transformation may be obtained differently in view of specific implementation conditions and parameters.

5.2. Description of a general embodiment

In a first general embodiment, a first way of processing the captured frames (from the camera) and the reference frames is disclosed. This first embodiment takes account of the rendering of the video on the display panel, the time took by the camera for capturing one single frame and the geometrical transformation to operate to the captured frames. These operations are used for matching the captured frame with the reference frames. Various improvements of this specific embodiment are disclosed herein below.

5.2.1. Display video rendering

Image displayed by the display panel (this image is called $L_d$) is not a simple frame of $I$. A display panel has some latency and this latency produces artefacts. $I$ is a discrete set of frames. The observation time $t$ is defined on a continuous scale and is bounded by the timestamps of two frames:

$$t_a < t < t_b$$

The image $L_d$ is the result of :

$$L_d = f(I[t_a], I[t_b], t, t_a, t_b)$$

Where $f$ is a smooth, continuously differentiable (on the domain) function. The function $f$ blends $I[t_a]$, $I[t_b]$ together, with $I[t_a]$ being more important if $t$ is close to $t_a$ and $I[t_b]$ being more important if $t$ is close to $t_b$.

Thus a first bias of the frames captured by the camera is integrated.

5.2.2. Camera shutter

It has been explained that the camera was shooting, at least partially, the display panel D2. However, the camera image capture is not instantaneous. The shutter stays open for a fixed amount of time $t_s = t_1 - t_0$.

Ignoring for the moment the geometric distortion of the display screen in the camera view, the captured image $L_c$ is:

$$L_c(t_0, t_1) = \int_{t=t_0}^{t_1} f(I[t_a(t)], I[t_b(t)], t, t_a(t), t_b(t))$$

Note that $t_a$ and $t_b$ are functions of the current time $t$ in the integrated part. This means that more than two input frames may be used to form $L_c$. Being able to use more than two input frames is very important as the camera integration time may be higher than the video frame duration. This is for example the case when the display panel D2 displays frames at a 100 Hz rate (100 images per second), whereas the camera captures the displayed frames at a 25 Hz or 30Hz rate (25 or 30 images per second).

Thus a second bias of the frames capture by the camera is integrated.

### 5.2.3. Geometry

Assume (for simplification) that the reference frame is attached to the top left corner of the display panel D2. The size $(w_m, h_m)$ in meters of the display panel is known a *priori*. The camera calibration is also known a *priori* and is defined by the 3x3 matrix $K_{cam}$. The video frames size $(w_v, h_v)$ in pixels is also known a *priori*.

A 3D point $^r m$, which lies on the display frame, lies on the $Z = 0$ plane:

$$^r m = \begin{bmatrix} ^r X \\ ^r Y \\ 0 \end{bmatrix}$$

$^r m$ is any point on the screen. $^r m$ is on the plane (in the geometrical sense) of the display frame, i.e. $Z = 0$ since the mark coincides with the top left corner of the display.

This point may be transformed in the camera frame:

$$^c m = {}^c T_r \ {}^r m$$

The image coordinates are then given by (These are the coordinates of the 3D point $^r m$ when it is transformed in the frame of the camera, projected and modified to take into account the calibration of the camera. This is a point in pixels):

$$\begin{bmatrix} ^c u \\ ^c v \\ 1 \end{bmatrix} = K_{cam} \begin{bmatrix} \dfrac{^c X}{^c Z} \\ \dfrac{^c Y}{^c Z} \\ 1 \end{bmatrix} = K_{cam} w(\begin{bmatrix} ^c X \\ ^c Y \\ ^c Z \end{bmatrix}) = K_{cam} w(c_m)$$

The function $w$ represents the perspective projection function. This is the division of the three elements of the vector by the third component.

For each pixel $^r p$ in $L_c$, the associated $^r m$ (in meters) is then:

$$^r p = \begin{bmatrix} ^r u \\ ^r v \\ 1 \end{bmatrix}$$

$$K_{input} = \begin{bmatrix} \dfrac{w_v}{w_m} & 0 & 0 \\ 0 & \dfrac{h_v}{h_m} & 0 \\ 0 & 0 & 1 \end{bmatrix}$$

$$^r m = K_{input}^{-1} \ {}^r p = g(^r p)$$

This is a second definition. It is explained here how to move from point to pixel in the video at a point in meters in the reference of the screen (ortho reference). "$g$" is the function that performs this transformation; it is used in the previous equation.

So there are two geometric definitions. A first one that models how the measurement in the image of the camera of a 3D point belonging to the screen is obtained. And a second definition which makes it possible to obtain a point in meters that belongs to the screen according to its coordinates in a reference image (an image of the video).

These two definitions allow to better understand the minimization function below.

### 5.2.4. Solving the problem

Considering the previous integration of the three biases and neglecting the motion of the camera during the integration time, the system estimates the pose by minimizing this equation:

$$\underset{{}^{c}T_r\,,t_0,t_1}{\operatorname{argmin}}\ \sum_{\substack{0\leq\,{}^{r}v\,\leq\,h_v \\ 0\leq\,{}^{r}u\,\leq\,w_v}} (L_c(t_0,t_1,\ {}^{r}u,\ {}^{r}v) - I_c\,(K_{cam}w(\ {}^{c}T_r\ g(\ {}^{r}u,\ {}^{r}v)))$$

Note that $h_v$ and $w_v$ may not be the real video size but a downsized version to fasten computation, as explained herein below, in specific improvement.

Thus, using this integration technique, one can use a video as a model for pose estimation. In augmented reality for entertainment, this is a strong advantage as one gets rid of external markers and the marker is directly integrated into the context.

### 5.3. Description of improvements

In this section, improvements are disclosed. Especially, these improvements are based on a reduction of the size of the frames (downsizing) so as to speed up the pose estimation process (especially with low capacity/resources devices). These improvements are spread in two parts: the first one relates to the obtaining of a coarse approximation of the transformation; the second part uses the coarse approximation to finely tune the transformation and obtaining a more precise transformation.

### 5.3.1. Initialization and coarse approximation

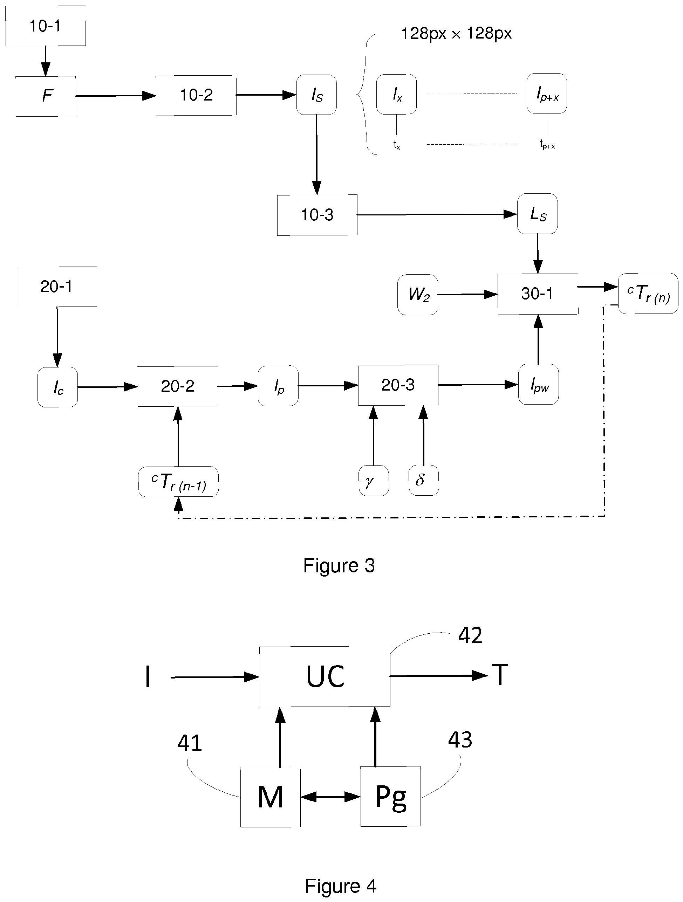

The goal of this part is to find a coarse approximation of the solution to enhance convergence radius of the minimization algorithm. It is described in relation with figure 3.

The reference frames are obtained (10-1) and are ready to be integrated for pose estimation. However, for accelerating the overall pose estimation, the video frames are down sampled (10-2) and smoothed to get a small and blurry image set $I_s$ of size $(w_s, h_s)$. The image set $I_s$ comprises images $(I_x,... I_{P+x})$, from time $t_x$ to time $t_{P+x}$. The size is for example of 128 pixels $\times$ 128 pixels.

Each image $I_x$ (of the set) provides a reference frame obtained by direct video acquisition and corresponding to an image displayed on the display panel (such as a TV set).

Inspired by $L_c$, a virtual shutter integration is done (10-3), on the reference frames, for the integration time:

$$L_s(t_0,t_1) = \int_{t=t_0}^{t_1} f(I_s[t_a(t)], I_s[t_b(t)], t, t_a(t), t_b(t))$$

Here, the virtual shutter integration (10-3) has the objective of recreating, virtually, from the downsized reference frames, an image which would be the result of a shooting by a camera, which has a shutter integration time. In other embodiments, or situations, where the shooting frame rate is the same that the frame rate of the reference frames (for example 30 images per second each), this virtual shutter integration is not necessary. The inverse is also true: in another embodiment, if the frame rate of the reference frames is lower than the shooting frames rate (i.e. 30 images per second for the reference frame and 60 images per second for the shooting frame rate), then the virtual shutter integration (10-3) is replaced by a kind of virtual shutter *"derivation",* in which a processing step is applied on the camera frames, which would basically consist in eliminating some *"exceeding"* frames of the set of camera frames. Thus, more generally, this step (10-3) could be named as *"temporally rescaling"* step which delivers sets of frames that are adapted for the processing.

Note that this step is optional and is implemented as a function of the way the coarse approximation is obtained. In some specific conditions, the temporal rescaling may be done before the coarse approximation, whereas in other conditions, the temporal rescaling may be directly a part of the coarse approximation. Additionally, considering the previous explanations, the temporal rescaling may be done as a function of known parameters, such as the frame rate of the captured frames, meaning that the interval of time steps is known, and meaning that the difference between $t_0$ and $t_1$ is fixed; this implies, thus that the calculations are much more efficient.

Once these previous (two or three) steps are processed, one thus has an integrated reference frame, ready for matching with captured frames.

At the same time or concomitantly, preprocessing of the captured frames is done. The captured frames ($I_c$) are obtained (20-1). Using the transformation ${}^cT_{r\,(n-1)}$ found at the previous camera frame, one can build (20-2) a new set of transformed images $I_p$, derived from the ones obtained by filming the display panel with the camera ($I_C$). Any of those images $I_P$, which encompasses not only the display panel but also its direct environment such as e.g. TV edges, is such that:

$$I_p(\,{}^rp) = I_c(K_{cam}w(\,{}^cT_{r\,(n-1)}g(\,{}^rp))) \,\forall\, \begin{cases} {}^ru \in [\,-b;w_s+b\,] \\ {}^rv \in [\,-b;h_s+b\,] \end{cases}$$

In the above formula, ${}^ru$ and ${}^rv$ designate the pixel coordinates of point ${}^rp$, and $b$ is a parameter chosen for defining extended windows in the horizontal ($w_s$) and vertical ($h_s$) directions of the display frame.

Note that the size of $I_p$ is larger than the one of $I_s$. For appropriate matching between the integrated reference frame obtained by video acquisition ($I_s$) and the frame coming from images captured ($I_p$) with the camera, a smaller image $I_{pw}$ is determined (20-3). Let's define $I_{pw}$ with the same size as $I_s$.

$$I_{pw}(\,{}^ru,\,{}^rv,\gamma,\delta) = I_p(\,{}^ru+\gamma,\,{}^rv+\delta) \,\forall\, \begin{cases} {}^ru \in [\,0;w_s[ \\ {}^rv \in [\,0;h_s[ \end{cases}$$

where $\gamma$ and $\delta$ are discretized adjustment values that enable an appropriate translation positioning of image $I_{pw}$ with respect to the larger image $I_p$, with respect to the display panel.

Finally, one gets images that can be mapped, by applying a mapping step (30-1) which comprises, in this embodiment, obtaining a coarse approximation, based for example on a Zero Mean Normalized Cross-Correlation, and refining the obtained approximation by using a minimization technique.

In this mapping step (30-1), for obtaining a coarse approximation, the continuous time window $W_2$ is divided into a discrete time set $W_d$ containing all the integer valued times associated respectively with successive video frames.

The images $I_s$ and $I_{pw}$ are then matched by means of a Zero Mean Normalized Cross-Correlation (ZNCC), which in a non-normalized form can be written:

$$ZNCC(t_0,t_1,\gamma,\delta) \cong \sum_{\substack{0\le\,{}^rv\,\le h_v \\ 0\le\,{}^ru\,\le w_v}} (L_s(t_0,t_1,\,{}^ru,\,{}^rv) - \overline{L_s(t_0,t_1)}) * (I_{pw}(\,{}^ru,\,{}^rv,\gamma,\delta) - \overline{I_s})$$

with $\overline{X}$ standing for a mean value of $X$.

The objective is:

$$\underset{\gamma,\delta,t_0,t_1}{\mathrm{argmax}}\,ZNCC(t_0,t_1,\gamma,\delta) \,\forall\, \begin{cases} \gamma \in [\,-b;b\,] \\ \delta \in [-b;b] \\ t_0 \in W_d \\ t_1 \in W_d \end{cases}$$

An exhaustive search is then performed to find the objective: this means that all the solutions are searched until the maximum solution is found. Once this solution is found, $\gamma$ and $\delta$ (of the solution) are used to update the prediction on the transformation ${}^cT_{r(n)}$.

Once the coarse solution is obtained, a non-linear optimization is performed to obtain a refined solution. Using this solution (mainly two sub steps: coarse and refined) allows reducing the use of valuables computing resources in the device which implements the method.

### 5.3.2. Minimization techniques

For obtaining a more precise estimation, minimization techniques may be used. Considering that a coarse approximation to the solution is known, a non-linear optimization is performed to obtain a refined solution.

According to an embodiment, the ESM method (Efficient Second Order Minimization - close to a Gauss Newton minimization) is used to minimize the objective.

Let us define for example the linear interpolation function as the interpolation function $f$:

$$f(t) = \big(t_b(t) - t_a(t)\big) - (t - t_a(t)) * I[t_a(t)] + (t - t_a(t)) * I[t_b(t)]$$

$$t_a(t) = \lfloor t \rfloor$$

$$t_b(t) = \lfloor t \rfloor + 1$$

$$f(t) = 1 - (t - \lfloor t \rfloor) * I[t_a(t)] + (t - \lfloor t \rfloor) * I[t_b(t)]$$

with $\lfloor \rfloor$ corresponding to the floor function (largest integer lower than or equal to the considered real number).

Note that because of $\lfloor t \rfloor$, $f$ is not continuously differentiable. This function cannot be used for minimization. The bounds of t are known and are defined by $W_2$. Thus, a natural spline $B$ is interpolated for each pixel using the values of $I_s[t_d] \ \forall \ t_d \in W_d$. (this may be done offline for reducing online costs, but it is not mandatory). $B$ is valid on the $W_2$ Interval. By definition $B$ is continuously differentiable on the defined domain.

$$f(t) = B(t)$$

$$L_c(t_0, t_1) = \int_{t=t_0}^{t_1} B(t)$$

$$\underset{{}^cT_r \, , t_0, t_1}{\mathrm{argmin}} \sum_{\substack{0 \le \, {}^rv \, \le \, h_v \\ 0 \le \, {}^ru \, \le \, w_v}} \left( \int_{t=t_0}^{t_1} B(t, \, {}^ru, \, {}^rv) - I_c \, (K_{cam} w( \, {}^cT_r \ g( \, {}^ru, \, {}^rv))) \right)$$

Note that only the left part of the objective function is modified by $t_0$, $t_1$. Only the right part is modified by ${}^cT_r$. All the parameters are estimated simultaneously using ESM minimization.

Other minimization techniques may also be used such as gradient descent algorithm.

### 5.4. Device for estimating the pose of a camera

The disclosure also proposes a device for estimating the pose of a camera. The device can be specifically designed for pose estimation or any electronic device comprising non-transitory computer readable medium and at least one processor configured by computer readable instructions stored in the non-transitory computer readable medium to implement any method in the disclosure.

According to an embodiment shown in figure 4, the device for estimating the pose of a camera includes a Central Processing Unit (CPU) 42, a Random Access Memory (RAM) 41, a Read-Only Memory (ROM) 43, a storage device which are connected via a bus in such a manner that they can carry out communication among them.

The CPU controls the entirety of the device by executing a program loaded in the RAM. The CPU also performs various functions by executing a program(s) (or an application(s)) loaded in the RAM.

The RAM stores various sorts of data and/or a program(s).

The ROM also stores various sorts of data and/or a program(s) (Pg).

The storage device, such as a hard disk drive, a SD card, a USB memory and so forth, also stores various sorts of data and/or a program(s).

The device performs the method for estimating the pose of a camera as a result of the CPU executing instructions written in a program(s) loaded in the RAM, the program(s) being read out from the ROM or the storage device and loaded in the RAM.

More specifically, the device can be a server, a computer, a pad, a smartphone or a camera in itself. The device comprises at least one input adapted for receiving the reference frames, at least one further input adapted to receiving the image data (e.g. the captured frames), the processor(s) for estimating the pose of the camera, and at least one output adapted to outputting the data associated with the pose estimation. The generated information is advantageously synchronized with the displayed frames for augmented reality, with a view to e.g. advertisement, second screen complements or games, but can also be disconnected from the displayed video.

The disclosure also relates to a computer program product comprising computer executable program code recorded on a computer readable non-transitory storage medium, the computer executable program code when executed, performing the method for estimating the pose of a camera. The computer program product can be recorded on a CD, a hard disk, a flash memory or any other suitable computer readable medium. It can also be downloaded from the Internet and installed in a device so as to estimate the pose of a camera as previously exposed.

**Claims**

1. Method for determining a pose estimation of a camera in an environment including a display for moving pictures, **characterized in that** said method comprises:

   - obtaining (10) reference frames corresponding in a synchronized way to at least part of at least some of multiple displayed frames displayed on said display;
   - obtaining (20) image data from images of said displayed frames captured with said camera by shooting said display;
   - determining (30) said pose estimation from correlating at time steps said image data and said reference frames.

2. The method according to claim 1, **characterized in that** determining said pose estimation relies on a previously determined pose estimation

3. The method according to claim 1, **characterized in that** said pose of said camera comprises a rigid transformation.

4. The method according to claim 1, **characterized in that** said pose estimation is combined with watermarking at least one of said reference frames.

5. The method according to claim 1, **characterized in that** said pose estimation is initialized with watermarking.

6. The method according to claims 4 or 6, **characterized in that** said watermarking comprises sound watermarking.

7. The method according to any of claims 1 to 6, **characterized in that** said reference frames cover a first time window ($W_1$), and said image data cover a second time window ($W_2$), wherein said first time window is greater or equal to said second time window.

8. The method according to any of claims 1 to 7, **characterized in that** said step for obtaining (10) reference frames comprises:

   - receiving (10-1) a set of reference frames (F), said set of reference frames (F) belonging to a time window ($W_1$);
   - downsizing (10-2) at least one frame of a set of reference frames, according to a predetermined downsizing parameter, delivering a set of reference downsized frames (Is);
   - temporally rescaling (10-3) at least one frame of said set of reference downsized frames (Is), according to a predetermined temporal rescaling parameter, delivering a set of temporally rescaled frames (Ls).

9. The method according to claim 8, **characterized in that** said step for temporally rescaling (10-3) at least one of said reference frames comprises determining a virtual shutter integration of at least two reference frames for a given time step comprised in said time window ($W_1$).

10. The method, according to any of claims 1 to 7, **characterized in that** said step for obtaining (20) image data from images of said displayed frames comprises:

- receiving (20-1) a set of capture frames ($I_C$), said set of capture frames ($I_C$) belonging to a time window ($W_2$);
- for at least one frame of said set of capture frames ($I_C$), applying (20-2) a previously obtained rigid transformation ($^cT_{r(n-1)}$), delivering a set of transformed images ($I_P$);
- downsizing (20-3) at least one frame of said set of transformed images ($I_P$), according to a predetermined downsizing parameter, and at least one adjustment parameter ($\gamma$, $\delta$) delivering a set of downsized transformed images ($I_{Pw}$).

11. The method, according to any of claims 1 to 10, **characterized in that** determining (30) said pose estimation from correlating at time steps said image data and said reference frames comprises a mapping step (30-1) which comprises :

- obtaining a coarse approximation of said pose estimation; and
- refining said coarse approximation delivering said pose estimation.

12. A device (D4) for determining a pose estimation of a camera (C) in an environment including a display (D2) for moving pictures, said device comprising at least one processor, wherein the at least one processor is configured to implement any method according to claims 1 to 11.

13. The device (D4) according to claim 12, **characterized in that** said at least one processor is configured for:

- obtaining (10) reference frames corresponding in a synchronized way to at least part of at least some of multiple displayed frames displayed on said display;
- obtaining (20) image data from images of said displayed frames captured with said camera by shooting said display;
- determining (30) said pose estimation from correlating at time steps said image data and said reference frames.

14. A mobile apparatus comprising a camera, **characterized in that** said apparatus further comprises a device (D4) for determining a pose estimation according to claim 12 or 13.

15. A computer program product comprising computer executable program code recorded on a computer readable non-transitory storage medium, the computer executable program code when executed, performing any method according to claims 1 to 11.

F

W$_1$

D1

I$_{x+n}$ — ... — I$_x$ — ... — I$_{x-n}$

D2

I$_x$

I$_x$

C

$F$

D4

IC$_{y-m}$   ...   IC$_y$   ...   IC$_{y+m}$

I$_C$

D3

$^cT_{r\,(x)}$ ............ $^cT_{r\,(x+n)}$

## Figure 2

$F$

10

20

I$_C$

30

$^cT_r$

## Figure 1

Figure 3

Figure 4

**EP 3 330 926 A1**

# EUROPEAN SEARCH REPORT

Europäisches Patentamt
European Patent Office
Office européen des brevets

**Application Number**

EP 16 30 6593

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | David Scherfgen: "Camera-Based 3D Pointing Approach Using Dynamic On-Screen Markers" In: "Camera-Based 3D Pointing Approach Using Dynamic On-Screen Markers", 15 June 2015 (2015-06-15), XP055368421, pages 1-145, | 1-8, 11-15 | INV. G06T7/73 |
| A | * abstract * <br> * Sec. 3.2 * <br> * Sec. 3.3 * <br> * Sec. 4.1.3; paragraph [0001] * <br> * Sec. 4.1.4; paragraph [0001] * <br> * Sec. 4.1.4; paragraph [0003] * <br> * Sec. 4.2.2, subsec. "Obtaining an initial estimate of the screen setup" * <br> * Sec. 4.2.3, subsec. "Frame repetition" * <br> * Sec. 4.3; paragraph [0001] - paragraph [0002] * <br> * Sec. 4.3.2; paragraph [0001] * <br> * Sec. 4.3.3; paragraph [0002] * <br> * Sec. 4.3.4; paragraph [0001] - paragraph [0003] * <br> * Sec. 4.3.5; paragraph [0001] - paragraph [0002] * <br> * Sec. 4.6.7 * <br> * figure 4.11 * <br> * figure 4.35 * <br> * Sec. 6.1; paragraph [0001] * <br> * Sec. 7.3, subsec. "Necessity of a marker" * <br> * Sec. 2.3; paragraph [0005] * <br> ----- <br> -/-- | 9,10 | |

**TECHNICAL FIELDS SEARCHED (IPC)**

G06T
G06F
G06K
G10L

The present search report has been drawn up for all claims

| Place of search | Date of completion of the search | Examiner |
|---|---|---|
| Munich | 10 May 2017 | Mohedano del Pozo, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

15

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NICK PEARS: "Smart Phone Interaction with Registered Displays", IEEE PERVASIVE COMPUTING, 17 April 2009 (2009-04-17), XP055370435, DOI: 10.1109/MPRV.2009.35 * page 18, column 2, line 32 - column 3, line 15 * * page 18, column 3, line 26 - line 28 * * page 18, column 3, line 36 - page 19, column 1, line 4 * * page 20, column 2, line 9 - line 19 * * figure 3 * ----- | 1-3, 12-15 | |
| A | S. BENHIMANE ET AL: "Homography-based 2D Visual Tracking and Servoing", INTERNATIONAL JOURNAL OF ROBOTICS RESEARCH., vol. 26, no. 7, July 2007 (2007-07), pages 661-676, XP055369963, US ISSN: 0278-3649, DOI: 10.1177/0278364907080252 * abstract * ----- | 1-3,10, 12-15 | |
| A | GÁBOR SÖRÖS ET AL: "Augmented visualization with natural feature tracking", MOBILE AND UBIQUITOUS MULTIMEDIA, 7 December 2011 (2011-12-07), pages 4-12, XP055369930, 2 Penn Plaza, Suite 701 New York NY 10121-0701 USA DOI: 10.1145/2107596.2107597 ISBN: 978-1-4503-1096-3 * abstract * * figure 4 * ----- | 1-3 | |

TECHNICAL FIELDS
SEARCHED (IPC)

The present search report has been drawn up for all claims

| Place of search | Date of completion of the search | Examiner |
|---|---|---|
| Munich | 10 May 2017 | Mohedano del Pozo, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)